# EUROPEAN PATENT APPLICATION

(11) **EP 4 376 166 A1**
(43) Date of publication of application: **29.05.2024**
(21) Application number: 22901867.6
(22) Date of filing: 02.12.2022
(51) Int. Cl.: H01M 10/48

(54) **TEMPERATURE SENSING MEMBER, AND BATTERY MODULE AND BATTERY PACK INCLUDING SAME**

(30) Priority: 02.12.2021 KR 20210170978
(71) Applicant: LG Energy Solution, Ltd., Seoul 07335 (KR)
(72) Inventor: YOON, Han Ki, Daejeon 34122 (KR); YU, Sanghyun, Daejeon 34122 (KR); NAMGOUNG, Hyeok, Daejeon 34122 (KR); CHO, Young Bum, Daejeon 34122 (KR); JEONG, Ji Won, Daejeon 34122 (KR); KU, Wonhoe, Daejeon 34122 (KR)
(74) Representative: Plasseraud IP
(86) International application number: PCT/KR2022/019492
(87) International publication number: WO 2023/101509

(57) **Abstract**

A temperature sensing member according to the present disclosure is located between two adjacent battery cells, and includes a main body part arranged in parallel to one surface of the battery cell, and a temperature measuring unit mounted on the main body part and measuring the temperature of the battery cell, wherein the main body part has a plate shape, and wherein the temperature measuring unit is inserted into one side of the main body part.

## Description

### [TECHNICAL FIELD]

### Cross Citation with Related Application(s)

This application claims the benefit of Korean Patent Application No. 10-2021-0170978 filed on December 2, 2021 with the Korean Intellectual Property Office, the entire contents of which are incorporated herein by reference.

The present disclosure relates to a temperature sensing member, a battery module and a battery pack including the same, and more particularly, to a temperature sensing member in which a sensing error is minimized, a battery module and a battery pack comprising the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for a small-sized device, two to three battery cells are arranged, but in the case of a secondary battery used for a medium- to large-sized device such as an automobile, a medium- to large-sized battery module or battery pack in which a large number of battery cells are electrically connected is used. Since medium- to large-sized battery modules are preferably manufactured with as small a size and weight as possible, a prismatic battery, a pouch-type battery, or the like, which can be stacked with high integration and has a small weight relative to capacity, is mainly used as a battery cell of the medium- to large-sized battery modules.

Meanwhile, if some battery cells in the battery module or battery pack get in an overvoltage, overcurrent, or overheating state, the safety and operational efficiency can be significantly problematic. Therefore, a voltage sensor, a temperature sensor, and the like may be incorporated in the battery module or battery pack, and the operating state of the battery cells can be checked in real time or at regular intervals through the pressure sensor or temperature sensor.

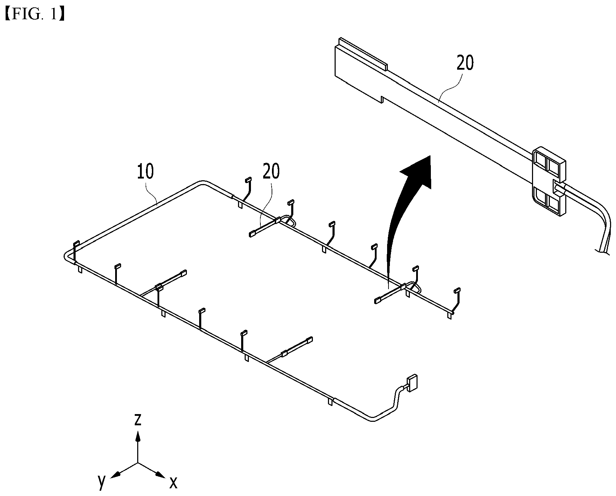

Fig. 1 is a diagram showing a temperature sensor provided in a conventional battery module.

Referring to Fig. 1, a temperature sensor 20 provided in a conventional battery module may be mounted on the housing 10. The housing 10 has a border shape that warps the periphery of the battery cell stack in which battery cells are stacked, and the temperature sensor 20 may be arranged to extend from one point of the housing 10 toward the inside of the housing 10 where the battery cell is located. Thereby, the temperature sensor 20 can be arranged between two adjacent battery cells and can detect the temperature of one side of the battery cell.

The battery module is provided with the temperature sensor 20 mounted on the housing 10, so that the temperature sensor 20 can be stably arranged between the battery cells. However, when a swelling phenomenon occurs in battery cells due to overvoltage, overcurrent, or overheating of the battery cells, the temperature sensor 20 and the battery cells can be pressed against each other as the separation space between the battery cells decreases, which causes a problem that the battery cell is damaged or the temperature sensor 20 erroneously measures the temperature of the battery cells.

Therefore, there is a demand for a new structure and shape of the temperature sensor 20 that does not excessively press the battery cell, even while withstanding the swelling stiffness of the battery cell.

### [DETAILED DESCRIPTION OF THE INVENTION]

### [Technical Problem]

It is an object of the present disclosure to provide a temperature sensing member that does not excessively press the battery cell, even while withstanding the swelling stiffness of the battery cell.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a temperature sensing member located between two adjacent battery cells, the temperature sensing member comprising: a main body part arranged in parallel to one surface of the battery cell, and a temperature measuring unit mounted on the main body part and measuring the temperature of the battery cell, wherein the main body part has a plate shape, and wherein the temperature measuring unit is inserted into one side of the main body part.

One side of the main body part into which the temperature measuring unit is inserted may have a protruding shape.

The temperature measuring unit includes a temperature sensor, and the temperature sensor may be located at a first point of the main body part.

The first point is a point located within a first distance from one side of the main body part into which the temperature measuring unit is inserted, and the first distance may have a value of 5 to 20% of the length of the main body part.

The temperature measuring unit includes a connector for forming an electrical connection with an external device, and the connector may be arranged so as to protrude from the main body part.

A thickness of the main body part may be 0.3 mm to 0.7 mm.

The main body part may be made from polypropylene(PP) or polycarbonate(PC).

According to another embodiment of the present disclosure, there is provided a battery module comprising the above-mentioned temperature sensing member.

According to yet another embodiment of the present disclosure, there is provided a battery pack comprising the above-mentioned temperature sensing member.

### [Advantageous Effects]

According to embodiments, a temperature sensing member whose thickness is minimized can prevent cell damage when a swelling phenomenon occurs, and minimize temperature measurement errors.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

Fig. 1 is a diagram showing a temperature sensor provided in a conventional battery module;
Fig. 2 is a perspective view of a temperature sensing member according to one embodiment of the present disclosure;
Fig. 3 is a top and side view of a temperature measuring unit included in the temperature sensing member of Fig. 2;
Fig. 4 is a diagram showing a connection between a main body part and a temperature measuring unit included in the temperature sensing member of Fig. 2;
Fig. 5 is a diagram showing an example in which the temperature sensing member of Fig. 2 is provided between battery cells;
Fig. 6 is a diagram for explaining a relative position between a battery cell and a temperature sensor included in the temperature sensing member of Fig. 2;
Fig. 7 is a diagram showing an experiment and the result of checking whether a temperature sensing member and a battery cell are damaged when a swelling phenomenon of a battery cell occurs; and
Fig. 8 is a diagram illustrating an example of a battery module provided with the temperature sensing member of Fig. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity. Meanwhile, similarly to the case where it is described as being disposed "on" or "above" another part, the case where it is described as being disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a temperature sensing member according to an embodiment of the present invention will be described.

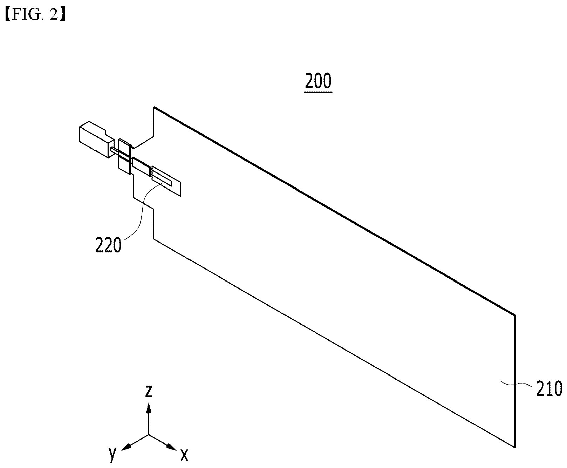

Referring to Figs. 2 to 5, the temperature sensing member 200 of the present embodiment may be for measuring the temperature of battery cells 110 within a battery pack or a battery module. The temperature sensing member 200 of the present embodiment can be inserted between battery cells 110 within a battery pack or a battery module to measure the temperature of a specific position of the battery cell 110.

The temperature sensing member 200 of the present embodiment may include a main body part 210 arranged in parallel to one surface of the battery cell 110 and a temperature measuring unit 220 mounted on the main body part 210 and measuring the temperature of the battery cell 110.

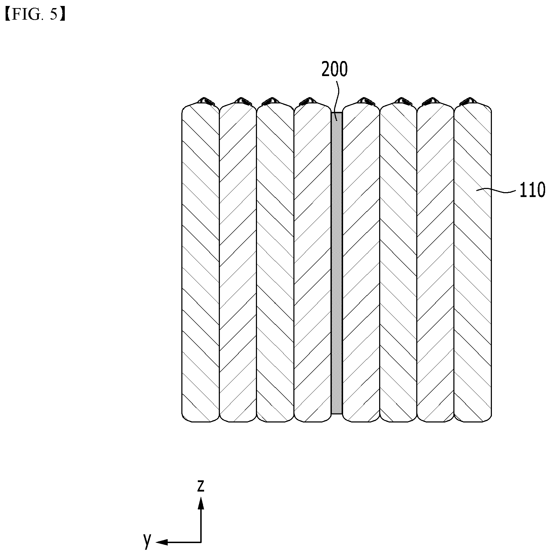

The main body part 210 may have a thin plate shape. As shown in Fig. 5, the main body part 210 may be inserted between two adjacent battery cells 110. The main body part 210 may cover one surface of the battery cell 110. The main body part 210 may contact one surface of the battery cell 110.

It is preferable that the main body part 210 entirely correspond to one surface of the battery cell 110. It may be preferable that the main body part 210 entirely covers one surface of the battery cell 110. The main body part 210 may have a shape similar to one surface of the battery cell 110. The main body part 210 may have a width and length similar to one surface of the battery cell 110.

If the main body part 210 is provided smaller than one surface of the battery cell 110, the main body part 210 may cause a distance deviation between two adjacent battery cells 110, whereby a large pressure is applied to a specific portion during swelling of the battery cell 110, so that the battery cell 110 or the temperature sensing member 200 may be damaged. Further, when the main body part 210 is arranged so as to have a slightly large distance from the lower edge, the position of the main body part 210 fluctuates due to gravity, which may make it difficult to measure the temperature at the position intended by a designer. Therefore, it may be preferable that the main body part 210 covers 70% or more, 80% or more, or 90% or more of one surface of the battery cell 110.

The main body part 210 may be a plate-like member having a thickness. The thickness of the main body part 210 may be 0.3 mm to 0.7 mm, preferably 0.4 mm to 0.6 mm. If the thickness of the main body part 210 is greater than 0.7 mm, the space between two adjacent battery cells 110 may be widened, so that the total volume of the battery cell stack in which the battery cells 110 are stacked can be increased. Moreover, if the thickness of the main body part 210 is smaller than 0.3 mm, it may be difficult to mount the temperature measuring unit 220 on the main body part 210.

The main body part 210 may be designed to have a uniform thickness, but it can be designed to have a non-uniform thickness to accommodate the volume change of the battery cell 110 during swelling of the battery cell 110. For example, the main body part 210 may be designed such that the thickness of the edge is greater than the thickness of the center.

The main body part 210 can be made from a material having a stiffness level that does not excessively press the battery cells 110 even while being not excessively deformed by the pressure applied to the main body part 210 when the volume of the battery cell 110 changes. For example, the main body part 210 can be made from polypropylene (PP) or polycarbonate (PC), and may be made from other materials having similar physical properties.

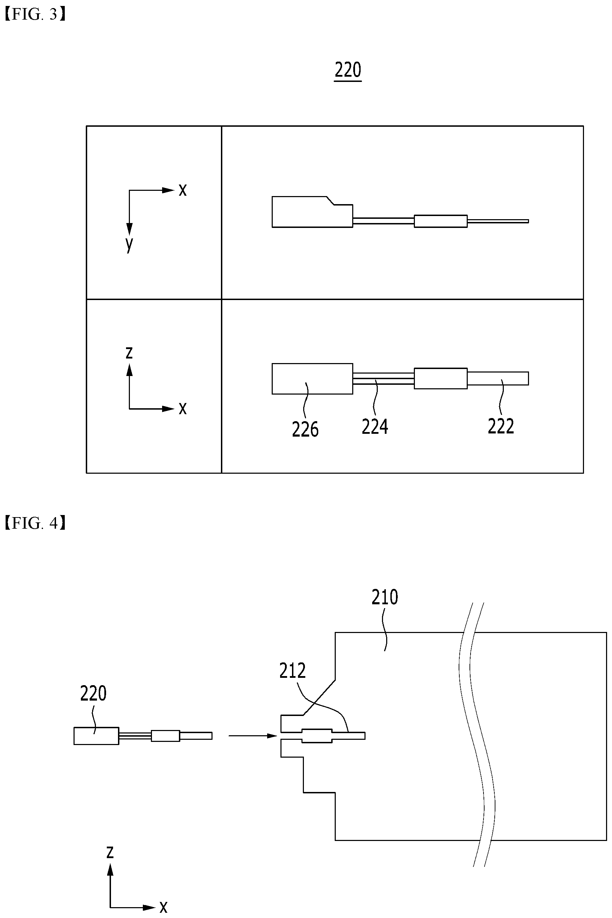

Referring to Fig. 3, the temperature measuring unit 220 may include a temperature sensor 222 for measuring temperature, a connector 226 for forming an electrical connection with an external device, and a wire 224 for electrically connecting the temperature sensor 222 and the connector 226. In addition, a molded or injected product made by incorporating a thermoplastic resin may be located between the temperature sensor 222 and the wire 224. Examples of the thermoplastic resin used herein include TPS, TPV, TPO, TPU, TPEE, and the like.

The temperature sensor 222 can measure the temperature of the battery cell 110 by attaching to or closely adhering to one surface of the battery cell 110. The temperature sensor 222 may be a thermistor whose resistance varies according to the change in temperature, but this is not necessarily the case. Any sensor that can measure temperature can be applied regardless of the kind.

Referring to Fig. 4, the temperature measuring unit 220 may be mounted on one side of the main body part 210. An insertion groove 212 into which the temperature measuring unit 220 can be inserted may be provided on one side of the main body part 210, and the temperature measuring unit 220 may be inserted into the main body part 210 such that the temperature sensor 222 is located inside the main body part 210. The connector 226 may protrude from the main body part 210 and locate outside the main body part 210, and the position of the wire 224 may be fixed at the edge of the main body part 210 by a fixing member such as tape.

One side of the main body part 210 into which the temperature measuring unit 220 is inserted may protrude in the longitudinal direction. Thereby, the temperature measuring unit 220 can be stably mounted on the main body part 210 and the temperature measuring unit 220 of slightly elongated shape can be protected. In addition, since the connector 226 of the temperature measuring unit 220 must protrude to the outside of the main body part 210 for connection with an external device, one side of the main body part 210 has a protruding shape, so that the connector 226 can be fixed or supported more stably.

The thickness of the temperature measuring unit 220 may be similar to that of the main body part 210. The temperature sensor 222, wire 224 and connector 226 may have a thickness of 0.3 mm to 0.7 mm, preferably 0.4 mm to 0.6 mm. As the thickness of the temperature measuring unit 220 is more similar to the thickness of the main body part 210, the temperature measurement of the battery cell 110 by the temperature measuring unit 220 can be more easily performed, and during swelling of the battery cell 110, the temperature measuring unit 220 may not damage the battery cell 110, or may not be damaged by the battery cell 110.

Here, the thickness of the temperature measuring unit 220 may be calculated based on the thickness direction of the main body part 210 or the stacking direction of the battery cell 110. The thickness of the temperature measuring unit 220 may be based on a value measured on an xy plane as shown in the upper end of Fig. 3. The thickness of the temperature measuring unit 220 may mean a value in the y-axis direction with respect to the x-axis.

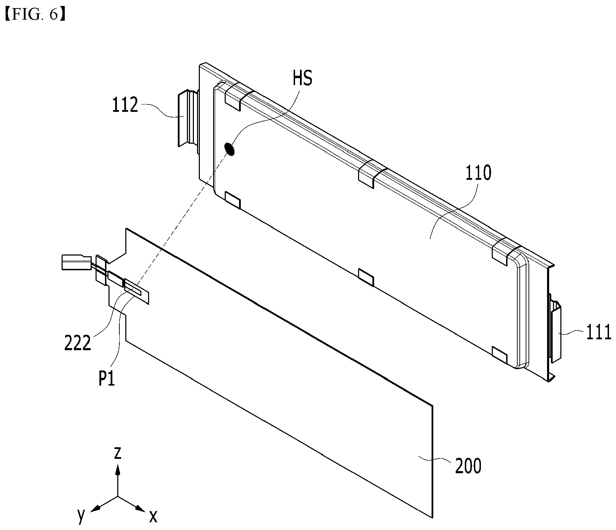

Fig. 6 is a diagram for explaining a relative position between a battery cell and a temperature sensor included in the temperature sensing member of Fig. 2.

The battery cell 110 may generate heat during charging and discharging, and the temperature of the battery cell 110 may appear differently depending on the position. The battery cell 110 may include a first electrode lead 111 and a second electrode lead 112 protruding to one side or the other side of the battery cell 110 case. Since the electrode leads 111 and 112 are connected to the external busbar, the temperature of the battery cell 110 may appear high at a position close to the electrode leads 111 and 112. In addition, the temperature of the battery cell 110 may appear higher at a position close to the second electrode lead 112 than at a position close to the first electrode lead 111. This may be due to the moving direction of the current.

Referring to Fig. 6, a hotspot HS may be formed in the battery cell 110. The hot spot HS may be a position where a highest temperature occurs that is relatively higher than other parts of the battery cell 110. The hotspot HS may refer to a position where the highest temperature occurs in the region of the battery cell 110 excluding the electrode leads 111 and 112. The position of the hotspot HS may be a position closer to the center than to the edge in the width direction (on the z-axis) of the battery cell 110. The position of the hotspot HS may be a position closer to the edge than the center in the longitudinal direction (on the x-axis) of the battery cell 110. The position of the hotspot HS may be formed at a position spaced apart from the second electrode lead 112 located on one side of the battery cell 110 by a predetermined distance. Here, the predetermined distance may be a value of 5% to 20% of the total length of the battery cell 110 including the electrode leads 111 and 112. Since the electrode tab coupled with the electrode lead may be located in a range of less than 5% of the total length from the second electrode lead 112, it is appropriate to exclude the corresponding range, and in a range greater than 20% of the total length, it may be difficult to form a hotspot HS due to the distance between the electrode tab and the electrode leads 111 and 112.

The temperature sensor 222 of the temperature sensing member 200 may be arranged so as to come close to the hot spot HS of the battery cell 110. The temperature sensor 222 is arranged to correspond to the hotspot HS of the battery cell 110, whereby the temperature sensing member 200 can measure the maximum temperature of the battery cell 110 or a temperature close thereto, and can prevent a thermal runaway phenomenon or the like due to heat generation of the battery cell 110 in advance.

The temperature sensor 222 of the temperature sensing member 200 may be located at the first point P1 of the main body part 210. When the temperature sensing member 200 and the battery cell 110 are arranged in parallel to each other, the first point P1 may be a point corresponding to the hotspot HS of the battery cell 110 or the periphery containing the hotspot HS. The first point P1 may be a position closer to the center than the edge of the main body part 210 in the width direction (on the z-axis). The first point P1 may be a position closer to the edge than the center in the longitudinal direction (on the x-axis) of the main body part 210. The first point P1 may be located within a first distance from one side of the main body part 210 into which the temperature measuring unit 220 is inserted. Here, the first distance may be a value within 5% to 20% of the total length of the main body part 210. The first point P1 may correspond to the hotspot HS, and the total length of the main body part 210 may be similar to the total length of the battery cell 110. Therefore, if the first distance is less than 5% or greater than 20% of the total length, it may be difficult for the first point P1 to correspond to the hotspot HS.

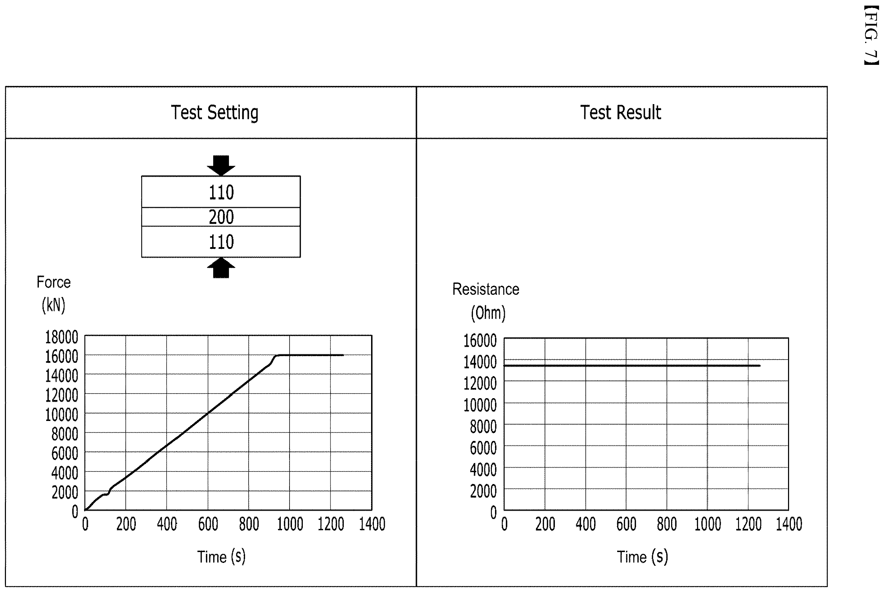

Fig. 7 is a diagram showing an experiment and the result of checking whether a temperature sensing member and a battery cell are damaged when a swelling phenomenon of a battery cell occurs.

The experiment of Fig. 7 is for confirming whether the pressure acting between the temperature sensing member 200 and the battery cell 110 increases when a swelling phenomenon of the battery cell occurs, thereby causing a damage to the temperature sensing member 200 and the battery cell 110. In this experiment, the temperature sensor 222 uses a thermistor, and the temperature sensing member 200 is located between the two battery cells 110, similarly to the actual assembly situation. In addition, in a state in which voltage is applied, the battery cell 110 and the temperature sensing member 200 are pressed at 1 kN/min, and after reaching 16 kN, the pressure is maintained for 5 minutes.

After the experiment of Fig. 7, no damage occurred to the thermistor included in the temperature sensing member 200, and in the battery cell 110, no dent or leakage was caused by the thermistor.

Referring to the experimental results of Fig. 7, it can be confirmed that the thermistor operates normally when observing that the resistance value appears constant even in the pressed environment described above. Therefore, it is confirmed that the temperature sensing member 200 provided in a plate shape does not damage the battery cell 110 even in an environment where pressure increases due to swelling, and no sensing error occurs.

A battery module including the temperature sensing member of the present embodiment will be described below.

A battery module including the above-mentioned temperature sensing member 200 may be provided in various forms.

In one example, the battery module may include a battery cell stack in which a plurality of battery cells 110 are stacked along one direction, a module frame that houses battery cell stacks, and a temperature sensing member 200 located between adjacent battery cells 110 of the battery cell stack. The battery module may further include busbar frames located on the front and rear surfaces of the battery cell stack, respectively, and an end plate that covers the busbar frame and is coupled with the module frame, and the battery module may have a closed structure via a module frame or an end plate.

In another example, the battery module may be provided in a module-less structure in which a module frame is omitted.

Typically, the battery module is housed in a battery pack and mounted on a device, whereby conventional battery cells are doubly protected by the module frame of the battery module and the pack frame of the battery pack. However, this double assembly structure not only increases the manufacturing cost and manufacturing process of the battery pack, but also has the drawback of deteriorating the reassembling ability when defects occur in some battery cells. In addition, when a cooling member, such as a cooling member, exists outside the battery module, there is a problem that the heat transfer path between the battery cell and the cooling member is slightly complicated.

However, if the battery module is provided in a module-less structure, the battery cell stacks may be directly coupled to the pack frame of the battery pack. Thereby, the structure of the battery pack can be made simpler, can obtain advantages in terms of manufacturing cost and manufacturing process, and can have an effect of achieving weight reduction of the battery pack.

As described above, a battery module having an open structure in which a module frame is omitted may be referred to as a 'cell block'.

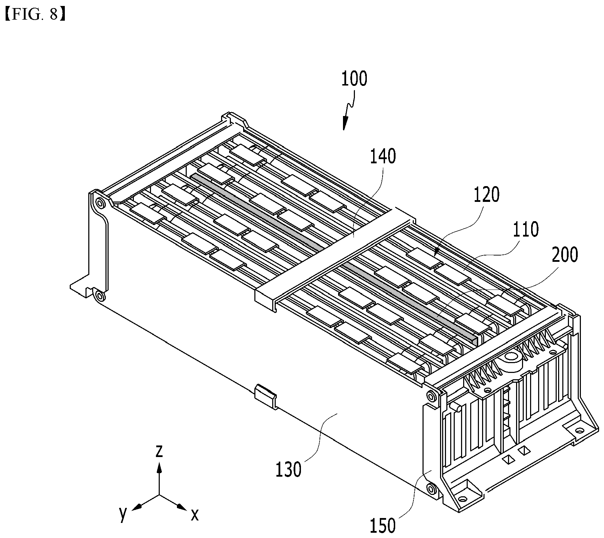

Next, a cell block type battery module will be described in more detail with reference to Fig. 8.

Fig. 8 is a diagram illustrating an example of a battery module provided with the temperature sensing member of Fig. 2.

Referring to Fig. 8, the battery module 100 provided in this embodiment may have a module-less structure in which a module frame is omitted.

The battery module 100 of the present embodiment may include a battery cell stack 120 in which a plurality of battery cells 110 are stacked along one direction, a side surface plates 130 located at both ends in the stacking direction of the battery cell stack 120, a holding strap 140 that wraps around the side surface plate 130 and the battery cell stack 120 and fixes the shape, a busbar frame 150 covering the front and rear surfaces of the battery cell stack 120, and a temperature sensing member 200.

The battery cells 110 may each include an electrode assembly, a cell case, and an electrode lead protruding from the electrode assembly. The battery cell 110 may be provided in a pouch or prismatic type that can maximize the number of stacks per unit area. For example, the battery cell 110 provided in a pouch type may be manufactured by housing an electrode assembly including a cathode, an anode, and a separator in a cell case made of a laminate sheet, and then heat-sealing a sealing part of the cell case. On the other hand, the drawing shows that the cathode lead and the anode lead of the battery cell 110 protrude in opposite directions, but this is not necessarily the case. It is also possible to make the electrode leads of the battery cell 110 protrude in the same direction.

The battery cell stack 120 may be formed by stacking a plurality of electrically connected battery cells 110 along one direction. The direction in which the plurality of battery cells 110 are stacked (referred to as 'stacking direction') may be the y-axis direction (or -y-axis direction), and the expression `axis direction' can be interpreted as including both +/- directions.

Meanwhile, the battery cells 110 are arranged along one direction, so that electrode leads of the battery cells 110 can be located on one surface of the battery cell stack or on the other surface facing the one surface. In this manner, the surface on which the electrode leads are located in the battery cell stack 120 may be referred to as the front or rear surface of the battery cell stack 120, and in Fig. 8, the front and rear surfaces of the battery cell stack 120 are shown by two surfaces facing each other on the x-axis. Further, the surface on which the outermost battery cell 110 is located in the battery cell stack 120 may be referred to as the side surface of the battery cell stack 120, and in Fig. 8, the side surface of the battery cell stack 120 is shown by two surfaces facing each other on the y-axis.

The side surface plate 130 may be provided to maintain the overall shape of the battery cell stack 120. The side surface plate 130 is a plate-like member, and can supplement the stiffness of the cell block instead of the module frame. The side surface plates 130 may be arranged at both ends of the battery cell stack 120 in the stacking direction, and may contact the outermost battery cells 110 on both sides of the battery cell stack 120.

The side surface plate 130 may be made of various materials and may be provided by various manufacturing methods. In one example, the side surface plate 130 may be a plastic material which is prepared by injection molding. In another example, the side surface plate 130 may be made from a leaf spring material. In yet another example, the side surface plate 130 may be made from a material having elasticity so that its shape can be partially deformed in response to a volume change of the battery cell stack 120 due to swelling.

The holding strap 140 may be for fixing the position and shape of the side surface plates 130 at both side ends of the battery cell stack 120. The holding strap 140 may be a member having a length and a width. Specifically, the battery cell stack 120 may be located between the two side surface plates 130 that contact the outermost battery cell 110, and the holding strap 140 may cross the battery cell stack 120 and connect the two side surface plates 130. Thereby, the holding strap 140 can prevent the distance between the two side surface plates 130 from increasing beyond a certain range, which allows the overall shape of the cell block to be maintained within a certain range.

The holding strap 140 may have hooking claws at both ends in the longitudinal direction for stably coupling with the side surface plate 130. The hooking claws may be formed by bending both ends of the holding strap 140 in the longitudinal direction. On the other hand, a hooking groove may be formed at a position corresponding to the hooking claw on the side surface plate 130, and the holding strap 140 and the side surface plate 130 can be stably coupled through the coupling of the hooking claw and the hooking groove.

The holding strap 140 may be provided with various materials or through various manufacturing methods. In one example, the holding strap 140 may be made from a material having elasticity, so that a change in volume of the battery cell stack 120 due to swelling can be allowed within a certain range.

On the other hand, the holding strap 140 is for fixing the relative position between the side surface surface plate 130 and the battery cell stack 120, and it can also be provided in a form different from that illustrated, if its purpose as a 'fixing member' is achieved. For example, the fixing member can be provided in the form of an elongated bolt, i.e., a long bolt that can cross between the two side plates 130. The side surface plate 130 can be provided with grooves into which long bolts can be inserted, and the long bolt can be simultaneously coupled with the two side surface plates 130 through the groove, thereby fixing the relative positions of the two side surface plates 130. The long bolt may be provided at an edge of the side surface plate 130, preferably at a position close to a vertex of the side surface plate 130. Depending on the design, it would be possible to replace the holding strap 140 with the above-mentioned long bolt, but it would also be possible to provide both the holding strap 140 and the long bolt to the cell block.

The busbar frame 150 can be located on one surface of the battery cell stack 120 to cover one surface of the battery cell stack 120 and, at the same time, guide connection between the battery cell stack 120 and an external device. The busbar frame 150 may be located on the front or rear surface of the battery cell stack 120. Two busbar frames 150 may be provided so as to be located on the front and rear surfaces of the battery cell stack 120. A busbar can be mounted on the busbar frame 150, whereby the electrode lead of the battery cell stack 120 is connected to the busbar, so that the battery cell stack 120 can be electrically connected to an external device.

The busbar frame 150 may include an electrically insulating material. The busbar frame 150 can limit contact with other portions of the battery cells 110 other than the portion where the busbar is joined to the electrode lead, and can prevent electrical short circuits from occurring.

The temperature sensing member 200 can be located between two adjacent battery cells 110 as shown in Fig. 5. As shown in Fig. 8, when eight battery cells 110 form a battery cell stack 120, the temperature sensing member 200 can be provided between the fourth and fifth battery cells 110. Since the center of the battery cell stack 120 may be difficult to dissipate heat, the temperature sensing member 200 is located at the center of the battery cell stack 120, thereby capable of measuring the maximum temperature of the battery cell stack 120 or a temperature close thereto and preventing a thermal runaway phenomenon due to heat generation of the battery cell 110 in advance. For a detailed description of the temperature sensing member 200, please refer to the contents described above.

Fig. 8 shows that only one temperature sensing member 200 is provided, but a plurality of temperature sensing members 200 can be provided in the battery module 100 depending on the design. It may be preferable that the plurality of temperature sensing members 200 are arranged at equal intervals, but this is not necessarily the case. If there is a location within the battery cell stack 120 where the temperature rise is concentrated, it may be most desirable to place the temperature sensing member 200 at that location.

Meanwhile, the above-mentioned battery module can be included in a battery pack. The battery pack may have a structure in which one or more of the battery modules according to the present embodiment are gathered, and packed together with a battery management system (BMS) and a cooling device that control and manage battery's temperature, voltage, etc.

The battery module and the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module and a battery pack including the seme, which is also falls under the scope of the present disclosure.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: battery module
110: battery cell
120: battery cell stack
130: side surface plate
140: holding strap
150: busbar frame
200: temperature sensing member
210: main body part
220: temperature measuring unit

## Claims

1. A temperature sensing member located between two adj acent battery cells, the temperature sensing member comprising:
a main body part arranged in parallel to one surface of the battery cell, and
a temperature measuring unit mounted on the main body part and measuring the temperature of the battery cell,
wherein the main body part has a plate shape, and
wherein the temperature measuring unit is inserted into one side of the main body part.

2. The temperature sensing member of claim 1, wherein:
one side of the main body part into which the temperature measuring unit is inserted has a protruding shape.

3. The temperature sensing member of claim 1, wherein:
the temperature measuring unit includes a temperature sensor, and
the temperature sensor is located at a first point of the main body part.

4. The temperature sensing member of claim 3, wherein:
the first point is a point located within a first distance from one side of the main body part into which the temperature measuring unit is inserted, and
the first distance has a value of 5 to 20% of the length of the main body part.

5. The temperature sensing member of claim 1, wherein:
the temperature measuring unit includes a connector for forming an electrical connection with an external device, and
the connector is arranged so as to protrude from the main body part.

6. The temperature sensing member of claim 1, wherein:
a thickness of the main body part is 0.3 mm to 0.7 mm.

7. The temperature sensing member of claim 1, wherein:
the main body part is made from polypropylene(PP) or polycarbonate(PC).

8. A battery module comprising the temperature sensing member of claim 1.

9. A battery pack comprising the temperature sensing member of claim 1.
